# EUROPEAN PATENT SPECIFICATION

(11) **EP 1 301 086 B1**
(45) Date of publication and mention of the grant of the patent: **19.10.2005**
(21) Application number: 01965063.9
(22) Date of filing: 05.07.2001
(51) Int. Cl.: A23G 3/00, A23G 1/00, G06F 19/00

(54) **A PROMOTIONAL ITEM FOR DISTRIBUTION WITH A COMMERCIAL PRODUCT**
REKLAMEMITTEL ZUR VERTEILUNG MIT EINER HANDELSWARE
ARTICLE PROMOTIONNEL DESTINE A ETRE DISTRIBUE AVEC UN PRODUIT COMMERCIAL

(30) Priority: 07.07.2000 IT TO000683
(43) Date of publication of application: 16.04.2003
(73) Proprietor: SOREMARTEC S.A., 6700 Schoppach-Arlon (BE); Ferrero S.p.A., 12051 Alba (IT); FERRERO OFFENE HANDELSGESELLSCHAFT m.b.H., 35260 Stadtallendorf (DE)
(72) Inventor: RASO, Gianfranco, MC-98000 Monaco (MC)
(74) Representative: Quinterno, Giuseppe
(86) International application number: PCT/EP2001/007689
(87) International publication number: WO 2002/007527

(56) References cited:
- EP-A- 0 731 404
- WO-A-00/23910
- US-A- 5 267 734
- US-A- 5 599 232
- US-A- 5 697 829
- US-A- 5 785 598
- US-A- 5 791 992
- US-A- 6 061 656
- US-A- 6 062 936

## Description

The subject of the present invention is a promotional item suitable for distribution in association with a commercial product such as, for example, a food product, in order to promote sales thereof, as defined in the preamble of claim 1.

The practice of associating promotional items with commercial products is very widespread.

As is well known, the "attractiveness" of the promotional items depends on the target public for whom the commercial products are predominantly intended.

Thus, for example, in the field of food products intended predominantly for a juvenile or adolescent public, toys or similar items are used as promotional items and are often produced in numerous variants which can form a "collection".

In recent times, the spread of mass-communication means and of electronic apparatus for communication, recreation, or work, such as personal computers, cellular telephones, etc. has increased at a bewildering pace. This has led to a considerable increase in interest in, knowledge of, and familiarity with the use of such means and apparatus, even at the level of the juvenile or adolescent public.

This new and overwhelming tendency in the interests of the younger members of the public represents a considerable sociological phenomenon which requires a reconsideration of current commercial practices and, in particular, also of the promotional items which are distributed in association with commercial products intended for this public.

US-A-5 599 232, which is considered to represent the closest prior art, discloses a memory cartridge for use in connection with an electronic video game console. The memory cartridge comprises an interface having a first casing adapted to be received by the video game console, and a game cartridge including a second casing which is removably attachable to said first casing and which encloses a game ROM which can be connected to the game console through the said interface. The interface comprises an electrical circuitry including a security circuit adapted to communicate with a security system which is provided in the game console and which is designed to prevent the microprocessor of the console from executing game programs stored in unauthorised memory cartridges.

US-A-6 061 656 proposes a collection and trading system using a computer equipment, wherein the collection items (or, more specifically, their unlocking keys) are contained in various memory devices such as floppy discs or optical storage discs, obtainable through a network collection.

In order to allow a user to view the collectible items, a program stored in an optical disc is to be preliminarily installed in a drive of the computer equipment. Said program already includes all of the collectible items forming the collection set, though in a "locked" condition: said items cannot be accessed and unlocked unless unlocking "keys" provided in the collectible floppy discs are accessed.

After the entire set of collectible items, or one or more predetermined subsets thereof, have been collected, a game can be played, using the said program. This provides an incentive to collect the entire set.

US-A-5 785 598 discloses a software cartridge for use in connection to an electronic game console. The cartridge is extensible with additional programs and/or data, by coupling thereto a secondary add-on cartridge.

An object of the present invention is to provide an innovative promotional item which takes account of these new trends in the interests of the public, particularly of the younger members of the public.

This and other objects are achieved, according to the invention, by a promotional item the basic characteristics of which are defined in appended Claim 1.

Further characteristics and advantages of the invention will become clear from the following detailed description, given by way of non-limiting example, with reference to the appended drawings, in which:
Figure 1 is a perspective view of an electronic chip which can be used as a promotional item according to the invention,
Figures 2 to 4 are perspective views which show commercial products, in particular food products, with which promotional items according to the invention are associated,
Figure 5 is a perspective view of a portable personal computer in association with which a promotional item according to the invention can be used,
Figures 6 and 7 are two perspective views of promotional items according to the invention, and
Figure 8 shows a promotional item according to the invention including a toy in which an electronic chip is incorporated.

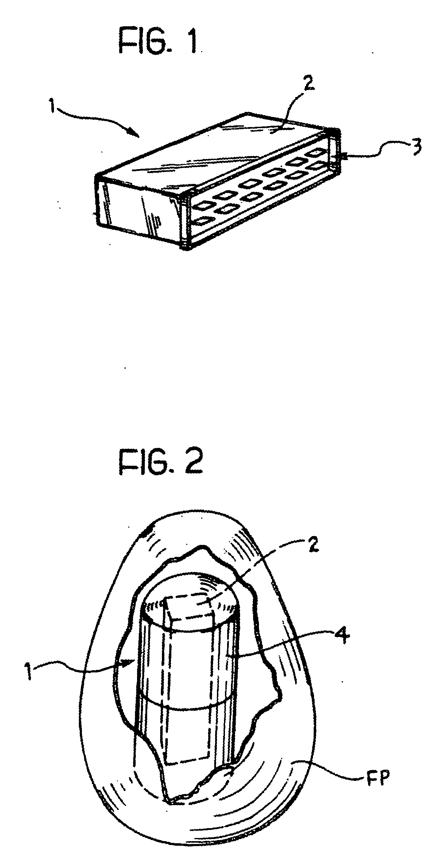

In Figure 1, a promotional item for distribution in association with a commercial product, in particular a food product, is indicated 1.

The promotional item 1 comprises an electronic chip containing a non-volatile memory 2 provided with a standard multi-pole connector.

Figure 2 shows, by way of non-limiting example, a food product FP with which the promotional item 1 is associated. In the embodiment of Figure 2, the food product FP is a chocolate egg which contains an electronic chip 2 of the type shown in Figure 1, enclosed in a container or case 4. Incidentally, the container or case 4 shown in Figure 2 is, for example, of the type described in International patent application WO93/00267.

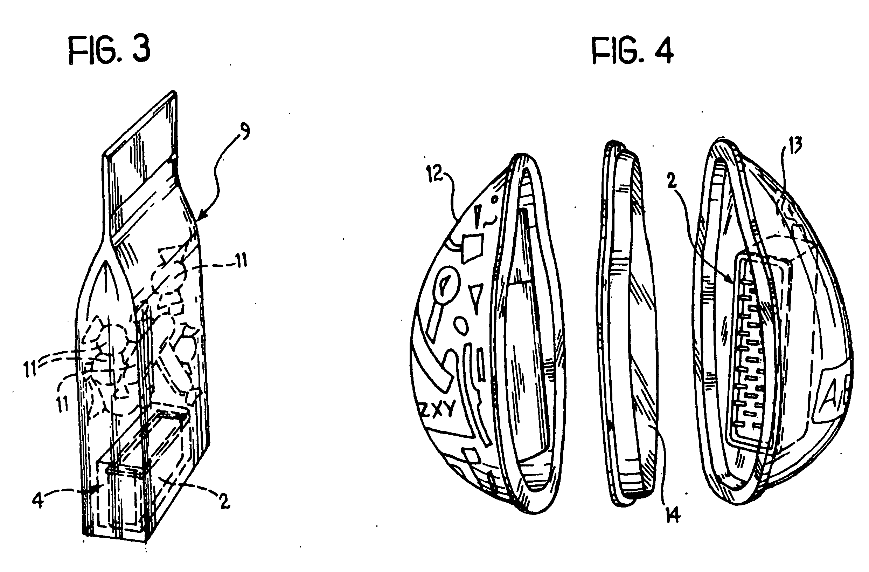

Figure 3 shows, as a further example, a bag-like package 9 enclosing a plurality of sweets 11 (or similar food products) and an electronic chip 2, housed in a case 4, as a promotional item.

Figure 4 shows a further example of a package comprising two half-shells or portions 12, 13 which can be coupled together with the interposition of a separating partition or dividing wall 14. One of the half-shells 12, is made, for example, of edible material (chocolate or the like). The receptacle defined between the partition 14 and the other half-shell 13, on the other hand, contains a promotional item represented by an electronic chip 2.

The promotional item according to the invention may be packaged and associated with a commercial product in many different ways. The commercial product or, in particular, the food product, with which the promotional item is associated may also be of widely varying types.

The electronic chip 2 is intended to be connected, by means of a standard connection device or interface, to a widely-distributed electronic apparatus which can use its contents.

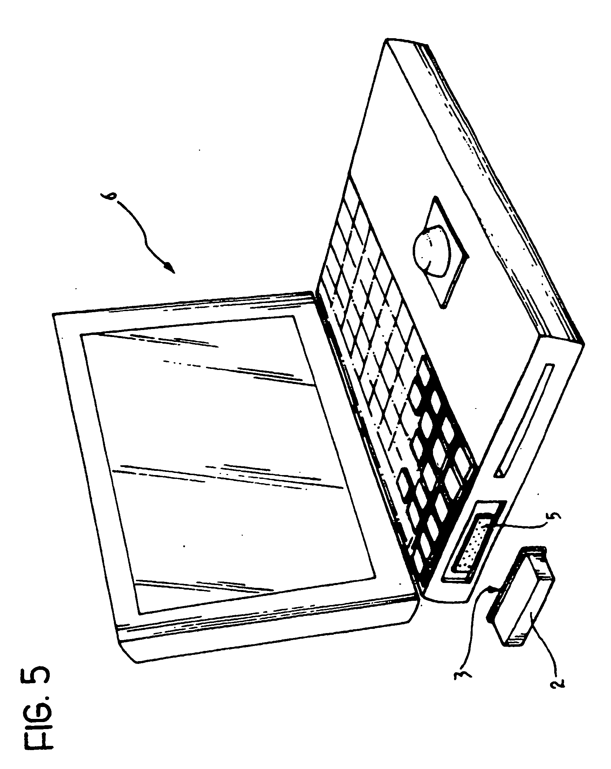

In the embodiment shown in Figure 5, the electronic chip 2 can be connected to an input/output port 5 of a personal computer 6. The port 5 is, for example, a parallel port normally intended for the connection of a printer to the personal computer.

The widely distributed electronic apparatus to which the electronic chip 2 is intended to be connected may, however, be, in general, any electronic apparatus provided with a microprocessor, for example, a cellular telephone, a television set, a so-called play station, a television decoder, etc.

The electronic chip used includes a predetermined information or data content.

In particular, the electronic chip 2 contains first information or data which can be used by a user, by means of the electronic apparatus. This first information or data may constitute, for example, a program for executing a video game or for presenting other audio-visual information, for example, instructive, cultural, or educational information.

In addition to the first information or data, the electronic chip 2 contains further information or data for enabling the first information or data to be used only when the chip is physically connected to the electronic apparatus the use of which is provided for. This characteristic prevents the usable content of the chip from being "downloaded" into memories of the electronic apparatus for subsequent use after the chip has been given away to a third party. The giving away of the chip to a third party in this way, after "downloading" its content, would greatly reduce or even cancel out the attractiveness of the promotional item.

The electronic chip 2 may advantageously but not necessarily contain additional information or data for at least partially cancelling the first information or data after a predetermined period of time or a predetermined event, subsequent to the first use of the chip.

According to a further aspect of the invention, the electronic chip 2 may also contain further partial information or data which can be acquired and retained permanently by the electronic apparatus to which the chip is connected but which can be used by the user solely in combination with further partial information or data that can be acquired from at least one other, similar chip. This solution enables the above-mentioned information or data, that is, the first information or data which can be used only when the chip is physically connected to the apparatus, to be used by the user immediately. Moreover, when the chip is connected to the electronic apparatus of use, the further partial information or data can be acquired and retained permanently in the apparatus of use for subsequent combination with the further partial information or data that can be acquired from one or more other, similar chips. With this solution, it is therefore possible, for example, to enable a user to use a video game of complex architecture, the program of which is broken up, as partial sets of information or data, in a plurality of chips. The collection of the various chips is thus encouraged and this translates into a further incentive for promoting sales of the commercial products with which the chips are associated.

According to a further aspect of the invention, the electronic chip 2 may contain information or data and/or decoding devices for decoding encrypted signals that can be acquired independently by the electronic apparatus for using the chip. By way of example, a chip of this type may contain data identifying a decoding polynomial for deciphering encrypted signals circulating on the Internet.

The chip 2 may also contain information or data for enabling the electronic apparatus to which the chip is connected to access a communication network such as the Internet. In particular, the chip 2 may contain information or data permitting access to a node or site on such a communication network to be accessed.

In general, the electronic chip 2 may be passive and arranged to receive electrical-supply energy from the electronic apparatus with which it is operatively associated.

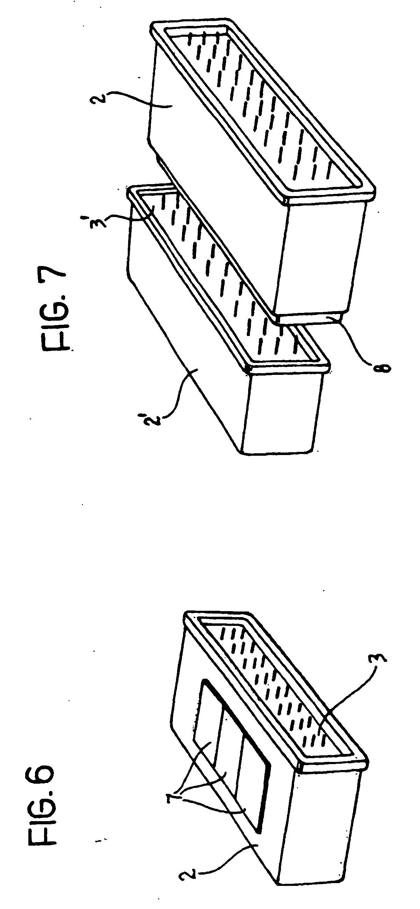

Alternatively, the electronic chip 2 may be active, having independent electrical-energy supply means. In that case, the chip 2 may comprise, for example, one or more photovoltaic cells such as those indicated 7 in Figure 6 and/or may have, for example, a supply battery.

According to another variant shown in Figure 7, in addition to the connector 3 for connection to an electronic apparatus of use, the electronic chip 2 may comprise, a further connector, indicated 8, for enabling it to be connected to a further electronic memory chip 2'. This further chip 2' has a connector 3' for connection to the connector 8 of the "master" chip 2.

The chip 2' may advantageously contain partial information or data which can be used by the user in combination with partial information or data contained in the main chip 2.

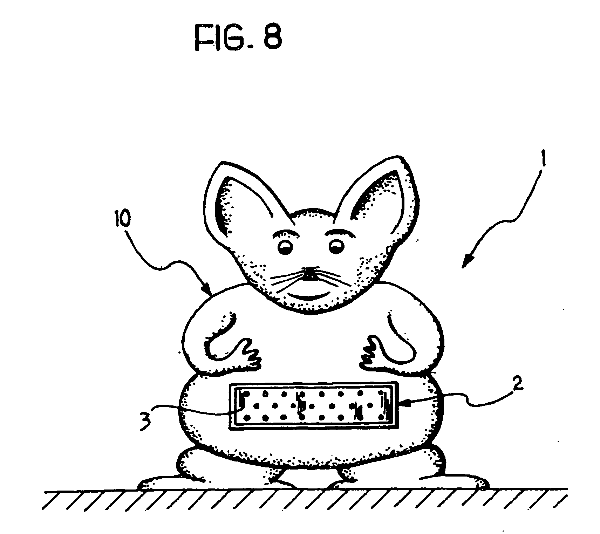

With reference to Figure 8, according to a further aspect of the invention, an electronic chip 2 of one of the types described above may advantageously be incorporated in a gadget, for example, a toy 10, in a manner such that its terminals are accessible in a portion of the surface of the gadget.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A promotional item (1) suitable for distribution in association with a commercial product (FP) such as a food product, in order to promote sales thereof,
comprising a memory device (2; 2') including an electronic chip (2; 2') which can be connected, by means of a standard connection device (3, 5), to a widely-distributed electronic apparatus (6) which is provided with memories and is capable of using the contents of said memory device (2; 2');
the memory device (2, 2') containing first information or data which can be used by a user, by means of the apparatus (6);
**characterised in that** said memory device is an electronic chip (2; 2') adapted for direct connection to said electronic apparatus (6); said chip (2; 2') containing further information or data for enabling the first information or data to be used only when the chip (2; 2') is physically connected to the electronic apparatus (6), preventing said first information or data from being downloaded into the memories of said electronic apparatus (6).

2. An item according to the preceding claim, in which the chip (2, 2') further contains information or data for bringing about at least partial cancellation of the first information or data after a predetermined period of time or a predetermined event, subsequent to a use of the chip (2, 2').

3. An item according to any of the preceding Claims, in which the chip (2, 2') also contains further partial information or data that can be acquired permanently by the apparatus (6) and can be used solely in combination with further partial information or data that can be acquired from at least one other, similar chip (2, 2').

4. An item according to any one of the preceding claims, in which the chip (2, 2') can be connected to an interface (5) of a personal computer or other electronic apparatus (6) provided with a microprocessor, the interface being, for example, a parallel port normally intended for the connection of a printer to the personal computer or other electronic apparatus (6).

5. An item according to any one of the preceding claims, in which the chip (2, 2') contains information or data and/or decoding devices for decoding encrypted signals that can be acquired by the apparatus (6).

6. An item according to any one of the preceding claims, in which the chip (2, 2') contains information or data for enabling the apparatus (6) to access a communication network.

7. An item according to Claim 6, in which the chip (2, 2') contains information or data for enabling the apparatus (6) to access a node or site of a communication network.

8. An item according to any one of the preceding claims, in which the chip (2, 2') is passive and is arranged to receive electrical-supply energy from the apparatus (6).

9. An item according to any one of Claims 1 to 7, in which the chip (2, 2') is active and is provided with independent electrical-energy supply means (7).

10. An item according to any one of the preceding claims, in which the chip (2) has interconnection means (8) for enabling it to be connected to a further electronic-memory chip (2').

11. An item according to any one of the preceding claims, further comprising a gadget such as a toy (10) in which the chip (2, 2') is incorporated in a manner such that its terminals (3) are accessible on a portion of the surface of the gadget (10).

## Patentansprüche

1. Werbeartikel (1), geeignet für die Verteilung im Zusammenhang mit einem kommerziellen Produkt (FP), wie beispielsweise einem Lebensmittelprodukt, um die Verkäufe davon zu fördern,
umfassend eine Speichereinrichtung (2; 2') mit einem elektronischen Chip (2; 2'), der mittels einer Standardverbindungseinrichtung (3, 5) mit einer weitverbreiteten elektronischen Vorrichtung (6), die mit Speichern versehen ist und in der Lage ist, die Inhalte der Speichereinrichtung (2; 2') zu verwenden, verbunden werden kann;
wobei die Speichereinrichtung (2, 2') erste Informationen über Daten enthält, die durch einen Verwender mittels der Vorrichtung (6) benutzt werden können;
**dadurch gekennzeichnet, dass** die Speichereinrichtung ein elektronischer Chip (2; 2') ist, der zur direkten Verbindung mit der elektronischen Vorrichtung (6) geeignet ist; wobei der Chip (2; 2') weitere Informationen oder Daten enthält, um zu ermöglichen, dass die ersten Informationen oder Daten nur genutzt werden können, wenn der Chip (2; 2') physikalisch mit der elektronischen Vorrichtung (6) verbunden ist, wodurch verhindert wird, dass die ersten Informationen und Daten in die Speicher der elektronischen Vorrichtung (6) heruntergeladen werden.

2. Artikel nach dem vorstehenden Anspruch, bei dem der Chip (2, 2') ferner Informationen oder Daten enthält, um wenigstens eine Teillöschung der ersten Informationen oder Daten nach einer vorbestimmten Zeitdauer oder einem vorbestimmten Ereignis nachfolgend der Verwendung des Chips (2, 2') zu bewirken.

3. Artikel nach einem der vorstehenden Ansprüche, bei dem der Chip (2, 2') auch weitere Teilinformationen oder Daten enthält, die durch die Vorrichtung (6) permanent erfasst werden können und nur in Verbindung mit weiteren Teilinformationen oder Daten, die von wenigstens einem anderen ähnlichen Chip (2, 2') erlangt werden können, benutzt werden können.

4. Artikel nach einem der vorstehenden Ansprüche, bei dem der Chip (2, 2') mit einem Interface (5) eines Personal Computer oder einer anderen elektronischen Vorrichtung (6), die mit einem Mikroprozessor versehen ist, verbunden werden kann, wobei das Interface zum Beispiel ein Parallelanschluss ist, der üblicherweise zur Verbindung eines Druckers mit dem Personal Computer oder der anderen elektronischen Vorrichtung (6) gedacht ist.

5. Artikel nach einem der vorstehenden Ansprüche, bei dem der Chip (2, 2') Informationen oder Daten enthält und/oder Dekodiereinrichtungen zum Dekodieren verschlüsselter Signale, die durch die Vorrichtung (6) erfasst werden können.

6. Artikel nach einem der vorstehenden Ansprüche, bei dem der Chip (2, 2') Informationen oder Daten enthält, um der Vorrichtung (6) Zugang zu einem Kommunikationsnetzwerk zu ermöglichen.

7. Artikel nach Anspruch 6, bei dem der Chip (2, 2') Informationen oder Daten enthält, um der Vorrichtung (6) Zugang zu einem Knotenpunkt oder einer Stelle eines Kommunikationsnetzwerks zu ermöglichen.

8. Artikel nach einem der vorstehenden Ansprüche, bei dem der Chip (2, 2') passiv ist und angeordnet ist, um die elektrische Stromversorgung von der Vorrichtung (6) zu empfangen.

9. Artikel nach einem der Ansprüche 1 bis 7, bei dem der Chip (2, 2') aktiv ist und mit einer unabhängigen Stromversorgungseinrichtung (7) versehen ist.

10. Artikel nach einem der vorstehenden Ansprüche, bei dem der Chip (2) eine Einrichtung zur gegenseitigen Verbindung (8) aufweist, um zu ermöglichen, ihn mit einem weiteren elektronischen Speicherchip (2') zu verbinden.

11. Artikel nach einem der vorstehenden Ansprüche, ferner umfassend eine Spielerei, wie beispielsweise ein Spielzeug (10), in dem der Chip (2, 2') auf eine Art und Weise eingebaut ist, dass seine Anschlüsse (3) auf einem Abschnitt der Oberfläche der Spielerei (10) zugänglich sind.

## Revendications

1. Article promotionnel (1) adapté pour la distribution en association avec un produit commercial (FP) tel qu'un produit alimentaire, pour promouvoir la vente de celui-ci,
comprenant un dispositif de mémoire (2 ; 2') comprenant une puce électronique (2 ; 2') qui peut être raccordée, au moyen d'un dispositif de raccordement standard (3, 5), à un appareil électronique largement distribué (6) qui est pourvu de mémoires et est capable d'utiliser le contenu dudit dispositif de mémoire (2 ; 2') ;
le dispositif de mémoire (2, 2') contenant des premières informations ou données qui peuvent être utilisées par un utilisateur, au moyen de l'appareil (6) ;
**caractérisé en ce que** ledit dispositif de mémoire est une puce électronique (2 ; 2') adaptée pour un raccordement direct au dit appareil électronique (6) ; ladite puce (2 ; 2') contenant en outre des informations ou données destinées à permettre aux premières informations ou données d'être utilisées uniquement lorsque la puce (2 ; 2') est raccordée physiquement à l'appareil électronique (6), empêchant lesdites premières informations ou données d'être téléchargées dans les mémoires dudit appareil électronique (6).

2. Article selon la revendication précédente, dans lequel la puce (2, 2') contient en outre des informations ou données pour apporter au moins une annulation partielle des premières informations ou données après une période de temps prédéterminée ou un événement prédéterminé, à la suite d'une utilisation de la puce (2, 2').

3. Article selon une quelconque des revendications précédentes, dans lequel la puce (2, 2') contient en outre d'autres informations ou données partielles qui peuvent être acquises de manière permanente par l'appareil (6) et peuvent être utilisées uniquement en combinaison avec d'autres informations ou données partielles qui peuvent être acquises à partir d'au moins une autre puce similaire (2, 2').

4. Article selon l'une quelconque des revendications précédentes, dans lequel la puce (2, 2') peut être raccordée à une interface (5) d'un ordinateur personnel ou un autre appareil électronique (6) pourvu d'un microprocesseur, l'interface étant, par exemple, un port parallèle destiné normalement pour le raccordement d'une imprimante à l'ordinateur personnel ou autre appareil électronique (6).

5. Article selon l'une quelconque des revendications précédentes, dans lequel la puce (2, 2') contient des informations ou données et/ou des dispositifs de décodage destinés à décoder des signaux chiffrés qui peuvent être acquis par l'appareil (6).

6. Article selon l'une quelconque des revendications précédentes, dans lequel la puce (2, 2') contient des informations ou données pour permettre à l'appareil (6) d'accéder à un réseau de communications.

7. Article selon la revendication 6, dans lequel la puce (2, 2') contient des informations ou données destinées à permettre à l'appareil (6) d'accéder à un noeud ou un site d'un réseau de communication.

8. Article selon l'une quelconque des revendications précédentes, dans laquelle la puce (2, 2') est passive et est agencée pour recevoir une énergie d'alimentation électrique en provenance de l'appareil (6).

9. Article selon l'une quelconque des revendications 1 à 7, dans lequel la puce (2, 2') est active et est pourvue de moyens d'alimentation en énergie électrique indépendants (7).

10. Article selon l'une quelconque des revendications précédentes, dans lequel la puce (2) comprend des moyens d'interconnexion (8) destinés à lui permettre d'être raccordée à une autre puce de mémoire électronique (2').

11. Article selon l'une quelconque des revendications précédentes, comprenant en outre un gadget, tel qu'un jouet (10) dans lequel la puce (2, 2') est incorporée d'une manière telle que ses bornes (3) sont accessibles sur une partie de la surface du gadget (10).
